# EUROPEAN PATENT SPECIFICATION

(11) **EP 3 467 327 B1**
(45) Date of publication and mention of the grant of the patent: **10.03.2021**
(21) Application number: 17806290.7
(22) Date of filing: 08.05.2017
(51) Int. Cl.: F16C 19/18, B23B 19/02, F16C 33/32, F16C 33/44, F16C 19/56, F16C 19/54

(54) **MULTI-ROW COMBINATION ANGULAR CONTACT BALL BEARING DEVICE**
MEHRREIHIGE KOMBINIERTE SCHRÄGKUGELLAGERVORRICHTUNG
DISPOSITIF DE ROULEMENT À BILLES À CONTACT OBLIQUE COMBINÉ À PLUSIEURS RANGÉES

(30) Priority: 03.06.2016 JP 2016111445
(43) Date of publication of application: 10.04.2019
(73) Proprietor: NTN Corporation, Osaka-shi, Osaka 550-0003 (JP)
(72) Inventor: HASHIZUME, Shouhei, Kuwana-shi Mie 511-8678 (JP)
(74) Representative: Grünecker Patent- und Rechtsanwälte PartG mbB
(86) International application number: PCT/JP2017/017375
(87) International publication number: WO 2017/208731

(56) References cited:
- DE-A1-102006 020 271
- JP-A- H04 248 021
- JP-A- 2005 299 761
- JP-A- 2006 307 912
- JP-A- 2006 326 695
- JP-A- 2013 194 886
- US-A1- 2010 215 303
- US-B1- 6 481 898

## Description

### TECHNICAL FIELD

The present invention relates to a multi-row angular-contact ball bearing device for use in supporting a machine tool main shaft.

### BACKGROUND ART

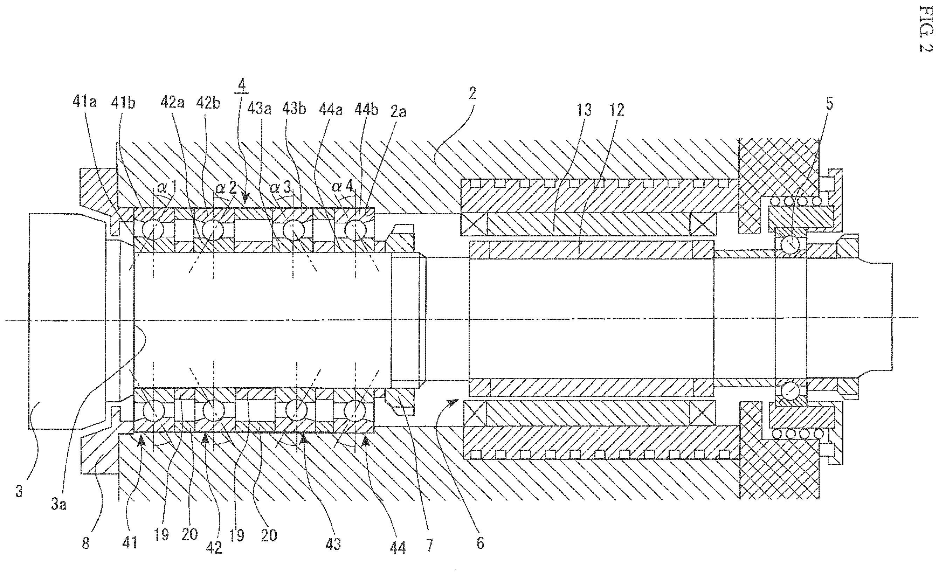

As shown in Fig. 2 for example, a main shaft 3 of a main shaft device 1 in a machine tool is supported by a front-side bearing 4 and a rear-side bearing 5.

The front-side bearing 4 is provided by a multi-row angular-contact ball bearing device which includes angular-contact ball bearings 41 through 44, each having a contact angle, arranged in back-to-back configuration at a front and a rear positions.

For example, Patent Literature 1 discloses an angular-contact ball bearing device of a four-row back-to-back configuration, as a multi-row angular-contact ball bearing device.

As shown in Fig. 2, the four-row back-to-back configuration angular-contact ball bearing device includes four rows of angular-contact ball bearings 41 through 44, with two of the rows disposed at a front position and the other two of the rows disposed at a rear position. In this arrangement, contact angles α1, α2 of the front-position angular-contact ball bearings 41, 42 and contact angles α3, α4 of the rear-position angular-contact ball bearings 43, 44 are opposed to each other

Patent Literature 2 discloses the features of the preamble of claim 1.

### CITATION LIST

### PATENT LITERATURE

Patent Literature 1: JP-A 2011-52714 Gazette
Patent Literature 2: DE 10 2006 020271 A1

### SUMMARY OF INVENTION

### TECHNICAL PROBLEM

In recent years, there is an increasing requirement for size reduction in the main shaft 3 of the main shaft device 1 in a machine tool, in addition to high-speed operation, high rigidity and high accuracy. One solution to this is to reduce the number of rows of the angular-contact ball bearings used in the main shaft 3.

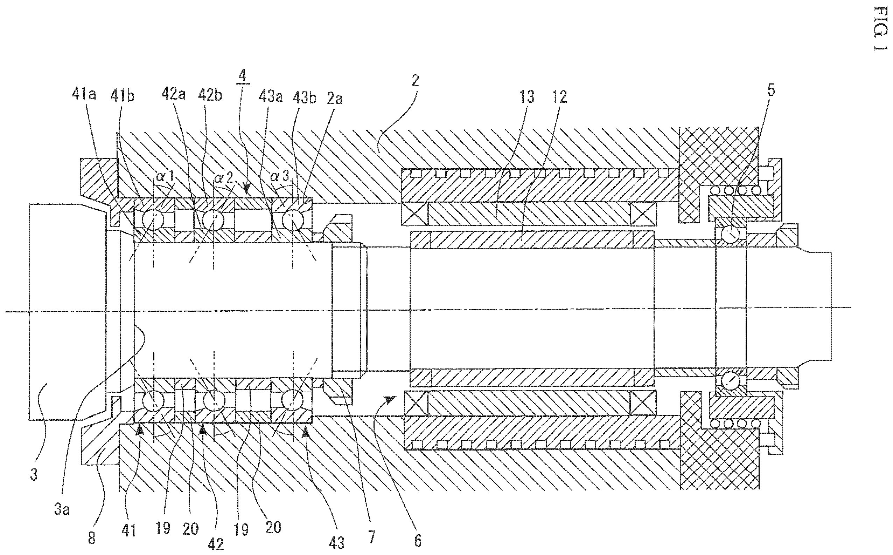

For example, the four-row back-to-back configuration in Fig. 2 is changed to three-row back-to-back configuration as shown in Fig. 1 and the main shaft is shortened; or a new three-row back-to-back configuration is used for a newly designed main shaft.

Typically in machine tool main shaft, angular-contact ball bearings are combined in such a way that their contact angles are opposed to each other, and a preload is applied in order to achieve high-speed operation, high rigidity and high accuracy. The preload is balanced within bearing groups in which the contact angles are opposed to each other. Like in the example of a three-row back-to-back configuration in Fig. 1, in the case where the number of rows of the angular-contact ball bearings 41 through 43 differs at a front position and a rear position, namely in the case where the front positon has two rows provided by the angular-contact ball bearings 41, 42 whereas the rear position has one row provided by the angular-contact ball bearing 43, the rear position which has a fewer number of rows (the one-row side of the three-row back-to-back configuration), i.e., the angular-contact ball bearing 43, is subjected to a larger load.

As an example, Table 1 shows specifications of an actual bearing, in which the front-position angular-contact ball bearings 41, 42 have a maximum contact surface pressure (MPa) of 1600 while the rear-position angular-contact ball bearing 43 has a maximum contact surface pressure (MPa) 2000.

**[Table 1]**

| Bearing Array | Front Position | | Rear Position |
|---|---|---|---|
| | Bearing 41 | Bearing 42 | Bearing 43 |
| Contact Angle | α1=15° | α2=15° | α3=15° |
| Rolling Elementmaterial | Steel Ball | Steel Ball | Steel Ball |
| Rolling Element Diameter [Inch] | 11/32 | 11/32 | 11/32 |
| Number Of Rolling Elements [Quantity] | 26 | 26 | 26 |
| Amount Of Preload At Assembly [N] | 200 | 200 | 400 |
| Bearing Spring Constant (Axial) [N/Mm] | 32.2 | 32.2 | 43.6 |
| Basic Dynamic Load Rating [N] | 22400 | 22400 | 22400 |
| Maximum Contact Surface Pressure [Mpa] | 1600 | 1600 | 2000 |

As understood from Table 1, comparison in terms of maximum contact surface pressure between the rear-position angular-contact ball bearing 43 which has a smaller number of rows and the front-position angular-contact ball bearings 41, 42 which have a greater number of rows shows that the rear-position angular-contact ball bearing 43 which represents the smaller number of rows has a greater maximum contact surface pressure than the front-position angular-contact ball bearings 41, 42 which represent the greater number of rows. A result is that the rear-position angular-contact ball bearing 43 which represents the smaller number of rows generates a greater amount of heat than the front-position angular-contact ball bearings 41, 42 which represent the greater number of rows.

Also, since the main shaft of a machine tool must be rigidly supported against machining loads exerted to the front position, it is typical that a greater number of rows of angular-contact ball bearings are disposed in the front position and a smaller number of rows of angular-contact ball bearings are disposed in the rear position.

A mainstream in the main shaft of machine tools is to use a built-in motor main shaft (a main shaft which has a motor within itself). In this shaft, the built-in motor is disposed near the small number of rows of angular-contact ball bearings at the rear position. In recent years, due to the size reduction in machine tool main shafts, there is a trend that the smaller number of rows of angular-contact ball bearings at the rear position and the built-in motor are placed at a closer distance from each other than before.

During operation, the motor in the built-in motor main shaft generates heat. This means that the smaller number of rows of angular-contact ball bearings at the rear position which are operating adjacently are subjected to heat, in addition to a large load they are subjected to. In other words, there is increased heat from a greater maximum contact surface pressure and there is additional heat from the motor, and these push up the temperature of bearings to a very critical range.

Therefore, an object of the present invention is to provide a multi-row angular-contact ball bearing device in which angular-contact ball bearings each having a contact angle are arranged in back-to-back configuration in an array of three or a greater number of rows and the number of rows of the angular-contact ball bearings in a front position and the number of rows in a rear position are different from each other; and in which heat generation by the bearings in the smaller number of rows is reduced for prevention of burnout problems and extension of bearing life.

### SOLUTION TO PROBLEM

In order to achieve the above-described object, the present invention provides a multi-row angular-contact ball bearing device comprising: angular-contact ball bearings, each having a contact angle, arranged in back-to-back configuration in an array of three or a greater number of rows, and the number of rows of the angular-contact ball bearings in a front position and the number of rows of the angular-contact ball bearings in a rear position are different from each other: In this arrangement, the angular-contact ball bearings in a greater number of rows have their rolling elements made of steel, and the angular-contact ball bearings in a smaller number of rows have their rolling elements made of ceramic.

Also, the angular-contact ball bearings in a greater number of rows have their rolling elements of a diameter Da, the angular-contact ball bearings in a smaller number of rows have their rolling elements of a diameter Da', and the diameters have a relationship expressed as Da< Da'≤1.5·Da.

Also, the angular-contact ball bearings in a smaller number of rows have a contact angle α'°, the angular-contact ball bearings in a greater number of rows have a contact angle α°, and the contact angles have a relationship expressed as α°<α'°≤(α+30)°.

Also, the angular-contact ball bearings in a greater number of rows have their retainers made of a polyamide resin, and the angular-contact ball bearings in a smaller number of rows have their retainers made of a phenol or a PEEK resin.

### ADVANTAGEOUS EFFECTS OF INVENTION

If the rolling elements of the rear-position angular-contact ball bearing are provided by ceramic balls as in the present invention, it becomes possible to reduce heat generation and burnout problems because ceramic balls are light-weighted and have a smaller linear expansion coefficient as compared to steel balls.

Also, if the rolling elements of the rear-position angular-contact ball bearing is provided by ceramic balls, and if the ceramic balls have its rolling element diameter Da' increased to not greater than one and a half times of a diameter Da of the rolling elements in the front-position angular-contact ball bearing (Da<Da'≤1.5·Da), then the rear-position angular-contact ball bearing has an improved basic dynamic load rating, leading to extended life, reduced maximum contact surface pressure, reduced heat generation and prevention of burnout.

Also, if a contact angle α' of the rear-position angular-contact ball bearing is made greater than a contact angle α of a two-row side angular-contact ball bearing, i.e., if it has a relationship expressed as α°<α'°≤ (α+30)°, it is possible to reduce heat generation and prevent burnout since the arrangement reduces a maximum contact surface pressure of the rear-position angular-contact ball bearing.

Also, if the rear-position angular-contact ball bearing has its retainer made of a phenol resin or a PEEK resin which have superior heat tolerance, it becomes possible to prevent burnout.

### BRIEF DESCRIPTION OF DRAWINGS

Fig. 1 is a sectional view of a machine tool's main shaft device having its front-side bearing provided by an angular-contact ball bearing device of a three-row back-to-back configuration.
Fig. 2 is a sectional view of a machine tool's main shaft device having its front-side bearing provided by an angular-contact ball bearing device of a four-row back-to-back configuration.

### DESCRIPTION OF EMBODIMENTS

Hereinafter, embodiments of the present invention will be described based on the attached drawings.

A multi-row angular-contact ball bearing device according to the present invention is used, for example, as a front-side bearing of a main shaft 3 of a main shaft device 1 of a machine tool shown in Fig. 1.

The main shaft device 1 of the machine tool rotatably supports the main shaft 3 inside a bearing housing 2, with a front-side bearing 4 and a rear-side bearing 5, with a built-in motor 6 provided at an intermediate position in the main shaft 3 to give rotation drive to the main shaft 3.

The front-side bearing 4 supports the main shaft 3 at its front end side, and is provided by a multi-row angular-contact ball bearing device. The rear-side bearing 5 supports the main shaft 3 at its rear end side, and is provided by a single-row angular-contact ball bearing in Fig. 1.

The front-side bearing 4 is provided by a three-row back-to-back configuration angular-contact ball bearing device in which three rows of angular-contact ball bearings 41, 42, 43 are grouped into two rows for a front position and one row for a rear position. The front-position angular-contact ball bearings 41, 42 have their contact angles α1, α2 opposed to a contact angle α3 of the rear-position angular-contact ball bearing 43.

The front-side bearing 4, which is provided by a multi-row angular-contact ball bearing device, has three inner rings 41a, 42a, 43a fastened and fixed to the main shaft 3 by tightening with an inner ring fixing nut 7, between a staged portion 3a of the main shaft 3 and the inner ring fixing nut 7.

Outer rings 41b, 42b, 43b of the front-side bearing 4 are fixed at their respective positions by tightening with bolts of an outer ring holding lid 8, for example, between a stepped portion 2a of the bearing housing 2 and the outer ring holding lid 8.

Inner ring spacers 19 and outer ring spacers 20 are placed between the angular-contact ball bearings 41, 42, 43 of the front-side bearing 4. By giving a difference in a width of the inner ring spacer 19 and that of the outer ring spacer 20, a fixed-portion preload is applied to the multi-row angular-contact ball bearing device.

The built-in motor 6 includes a rotor 12 which is fixed to the main shaft 3; and a stator 13 which is provided on an inner circumference of the bearing housing 2 to face the rotor 12.

In the case where the front position has two rows provided by the angular-contact ball bearings 41, 42 and the rear position has one row provided by the angular-contact ball bearing 43, the rear-position angular-contact ball bearing 43 in the smaller number of rows is subjected to a greater load, and thus the rear-position angular-contact ball bearing 43 in the smaller number of rows generates more heat than the front-position angular-contact ball bearings 41, 42 which are in the greater number of rows. In consideration of this, the present invention provides the following arrangements to reduce heat generation by the angular-contact ball bearing 43 in the smaller number of rows, for burnout prevention and life extension.

As shown in Table 2, the front-position angular-contact ball bearings 41, 42 according to the invention use steel balls for their rolling elements, and the rear-position angular-contact ball bearing 43 uses ceramic balls for its rolling elements.

As understood from Table 2, as the rear-position angular-contact ball bearing 43 has its rolling elements provided by ceramic balls, their maximum contact surface pressure is the same as in the case of steel balls specified in Table 1, yet this reduces heat generation and leads to burnout prevention because ceramic balls are light-weighted and have a smaller linear expansion coefficient as compared to steel balls.

**[Table 2]**

| Bearing Array | Front Position | | Rear Position |
|---|---|---|---|
| | Bearing 41 | Bearing 42 | Bearing 43 |
| Contact Angle | α1=15° | α2=15° | α3=15° |
| Rolling Elementmaterial | Steel Ball | Steel Ball | Ceramic Ball |
| Rolling Element Diameter [Inch] | 11/32 | 11/32 | 11/32 |
| Number Of Rolling Elements [Quantity] | 26 | 26 | 26 |
| Amount Of Preload At Assembly [N] | 200 | 200 | 400 |
| Bearing Spring Constant (Axial) [N/Mm] | 32.2 | 32.2 | 48.5 |
| Basic Dynamic Load Rating [N] | 22400 | 22400 | 22400 |
| Maximum Contact Surface Pressure [Mpa] | 1450 | 1450 | 2020 |

Further, as understood from Table 3, as the rolling element of the rear-position angular-contact ball bearing 43 is provided by a ceramic ball, if the ceramic ball has a rolling element diameter Da' increased to one and a half time of the ceramic ball's rolling element diameter Da in Table 2 (Da < Da' ≤ 1.5·Da), then the single-row rear-position angular-contact ball bearing 43 has an improved basic dynamic load rating, leading to extended life, reduced maximum contact surface pressure, reduced heat generation and prevention of burnout.

**[Table 3]**

| Bearing Array | Front Position | | Rear Position |
|---|---|---|---|
| | Bearing 41 | Bearing 42 | Bearing 43 |
| Contact Angle | α1=15° | α2=15° | α3=15° |
| Rolling Elementmaterial | Steel Ball | Steel Ball | Ceramic Ball |
| Rolling Element Diameter [Inch] | 11/32 | 11/32 | 1/2 |
| Number Of Rolling Elements [Quantity] | 26 | 26 | 24 |
| Amount Of Preload At Assembly [N] | 200 | 200 | 400 |
| Bearing Spring Constant (Axial) [N/Mm] | 32.2 | 32.2 | 50.0 |
| Basic Dynamic Load Rating [N] | 22400 | 22400 | 45000 |
| Maximum Contact Surface Pressure [Mpa] | 1490 | 1490 | 1690 |

Furthermore, Tables 4 and 5 show cases where Da'>1.5·Da, and Da'=1.8·Da. While it seems that these arrangements will brings benefits similar to those provided by the arrangement in Table 3, it turned out that in the range given by Table 4 and Table 5, Da' becomes much greater than Da; that in order for Da' to fit within the bearing space, there is an upper limit to its size; and as a result, Da must be decreased. For these reasons, settings in Table 4 or Table 5 reduce the load rating and/or increase the maximum contact surface pressure of the two-row angular-contact ball bearings 41, 42.

**[Table 4]**

| Bearing Array | Front Position | | Rear Position |
|---|---|---|---|
| | Bearing 41 | Bearing 42 | Bearing 43 |
| Contact Angle | α1=15° | α2=15° | α3=15° |
| Rolling Elementmaterial | Steel Ball | Steel Ball | Ceramic Ball |
| Rolling Element Diameter [Inch] | 11/32 | 11/32 | 5/8 |
| Number Of Rolling Elements [Quantity] | 26 | 26 | 22 |
| Amount Of Preload At Assembly [N] | 200 | 200 | 400 |
| Bearing Spring Constant (Axial) [N/Mm] | 32.2 | 32.2 | 51.2 |
| Basic Dynamic Load Rating [N] | 22400 | 22400 | 65500 |
| Maximum Contact Surface Pressure [Mpa] | 1320 | 1320 | 1520 |

**[Table 5]**

| Bearing Array | Front Position | | Rear Position |
|---|---|---|---|
| | Bearing 41 | Bearing 42 | Bearing 43 |
| Contact Angle | α1=15° | α2=15° | α3=15° |
| Rolling Elementmaterial | Steel Ball | Steel Ball | Ceramic Ball |
| Rolling Element Diameter [Inch] | 9/32 | 9/32 | 5/8 |
| Number Of Rolling Elements [Quantity] | 26 | 26 | 22 |
| Amount Of Preload At Assembly [N] | 200 | 200 | 400 |
| Bearing Spring Constant (Axial) [N/Mm] | 32.2 | 32.2 | 51.2 |
| Basic Dynamic Load Rating [N] | 14800 | 14800 | 65500 |
| Maximum Contact Surface Pressure [Mpa] | 1700 | 1700 | 1500 |

Next, Table 6 shows an example in which the contact angle α3 of the rear-position angular-contact ball bearing 43 is greater than the contact angles α1, α2 of the two-row angular-contact ball bearings 41, 42, i.e., (α1, α2)°<α3°≤ [(α1, α2)+30]°. In this case, the rear-position angular-contact ball bearing 43 has a smaller maximum contact surface pressure than that in Table 1, so it is possible to reduce heat generation and prevent burnout.

**[Table 6]**

| Bearing Array | Front Position | | Rear Position |
|---|---|---|---|
| | Bearing 41 | Bearing 42 | Bearing 43 |
| Contact Angle | α1=15° | α2=15° | α3=25° |
| Rolling Elementmaterial | Steel Ball | Steel Ball | Ceramic Ball |
| Rolling Element Diameter [Inch] | 11/32 | 11/32 | 11/32 |
| Number Of Rolling Elements [Quantity] | 26 | 26 | 26 |
| Amount Of Preload At Assembly [N] | 200 | 200 | 400 |
| Bearing Spring Constant (Axial) [N/Mm] | 32.2 | 32.2 | 103.5 |
| Basic Dynamic Load Rating [N] | 22400 | 22400 | 21100 |
| Maximum Contact Surface Pressure [Mpa] | 1540 | 1540 | 1850 |

In a conventional angular-contact ball bearing, it is typical to use an injection-molded retainer of a polyamide resin for its cost advantages. However, in cases where the bearing is subjected to a large load and thermal influence due to heat generation by the nearby built-in motor as is the present rear-position angular-contact ball bearing, using a retainer which is made of phenol resin or PEEK resin makes it possible to prevent burnout.

### REFERENCE SIGNS LIST

- 1 :: Main Shaft Device
- 2 :: Bearing Housing
- 3 :: Main Shaft
- 4 :: Front-Side Bearing
- 5 :: Rear-Side Bearing
- 41, 42, 43 :: Angular-contact ball bearing
- Da, Da' :: Rolling Element Diameter
- α1 -α3 :: Contact Angle

## Claims

1. A multi-row angular-contact ball bearing device comprising: angular-contact ball bearings (41, 42, 43), each having a contact angle (α1, α2, α3), arranged in an array of three or a greater number of rows,
the number of rows of the angular-contact ball bearings (41, 42) in a front position and the number of rows of the angular-contact ball bearings (43) in a rear position being different from each other,
the angular-contact ball bearings (41, 42) in the front position having a greater number of rows than the angular-contact ball bearings (43) in the rear position,
the number of rows of the angular-contact ball bearings (41, 42) in the front position and the number of rows of the angular-contact ball bearings (43) in the rear position being arranged in back-to-back configuration,
**characterized in that**
the angular-contact ball bearings (41, 42) in the front position in a greater number of rows have their rolling elements made of steel, and the angular-contact ball bearings (43) in the rear position in a smaller number of rows have their rolling elements made of ceramic.

2. The multi-row angular-contact ball bearing device according to claim 1, wherein the angular-contact ball bearings (41, 42) in a greater number of rows have their rolling elements of a diameter Da, the angular-contact ball bearings (43) in a smaller number of rows have their rolling elements of a diameter Da', and the diameters have a relationship expressed as Da<Da'≤1.5·Da.

3. The multi-row angular-contact ball bearing device according to claim 1 or 2, wherein the angular-contact ball bearings (43) in a smaller number of rows have their contact angle (α3) of α'°, the angular-contact ball bearings (41, 42) in a greater number of rows having their contact angle (α1, α2) of α°, and the contact angles (α1, α2, α3) have a relationship expressed as α°< α'°≤(α+30) °.

4. The multi-row angular-contact ball bearing device according to any one of claims 1 through 3, wherein the angular-contact ball bearings (41, 42, 43) each have a retainer, the angular-contact ball bearings (41, 42) in the front position in a greater number of rows have their retainers made of a polyamide resin, and the angular-contact ball bearings (43) in the rear position in a smaller number of rows have their retainers made of a phenol or a PEEK resin.

5. A bearing device (4) for a machine tool main shaft (3), wherein the bearing device (4) uses the multi-row angular-contact ball bearing devices according to one of Claim 1 through 4 for a front-side bearing (4) of the main shaft (3).

## Patentansprüche

1. Mehrreihige Schrägkugellageranordnung, umfassend: Schrägkugellager (41, 42, 43), die jeweils einen Kontaktwinkel (α1, α2, α3) aufweisen, die in einer Anordnung von drei oder einer größeren Anzahl von Reihen angeordnet sind,
wobei die Anzahl von Reihen der Schrägkugellager (41, 42) in einer vorderen Position und die Anzahl von Reihen der Schrägkugellager (43) in einer hinteren Position verschieden voneinander sind,
wobei die Schrägkugellager (41, 42) in der vorderen Position eine größere Anzahl von Reihen aufweisen als die Schrägkugellager (43) in der hinteren Position,
wobei die Anzahl von Reihen der Schrägkugellager (41, 42) in der vorderen Position und die Anzahl von Reihen der Schrägkugellager (43) in der hinteren Position in einer Rücken-an-Rücken-Konfiguration angeordnet sind,
**dadurch gekennzeichnet, dass**
die Schrägkugellager (41, 42) in der vorderen Position in einer größeren Anzahl von Reihen ihre Wälzkörper aus Stahl gemacht aufweisen, und die Schrägkugellager (43) in der hinteren Position in einer geringeren Anzahl von Reihen ihre Wälzkörper aus Keramik gemacht aufweisen.

2. Die mehrreihige Schrägkugellagervorrichtung gemäß Anspruch 1, wobei die Schrägkugellager (41, 42) in einer größeren Anzahl von Reihen ihre Wälzkörper mit einem Durchmesser Da aufweisen, die Schrägkugellager (43) in einer geringeren Anzahl von Reihen ihre Wälzkörper mit einem Durchmesser Da' aufweisen, und die Durchmesser eine als Da<Da'≤1,5· Da ausgedrückte Beziehung aufweisen.

3. Die mehrreihige Schrägkugellagervorrichtung gemäß Anspruch 1 oder 2, wobei die Schrägkugellager (43) in einer geringeren Anzahl von Reihen ihren Kontaktwinkel (a3) von α'°aufweisen, die Schrägkugellager (41, 42) in einer größeren Anzahl von Reihen ihren Kontaktwinkel (α1, α2) von α°aufweisen, und die Kontaktwinkel (α1, α2, a3) eine als α°<α'°≤(α+30)° ausgedrückte Beziehung aufweisen.

4. Die mehrreihige Schrägkugellagervorrichtung gemäß einem der Ansprüche 1 bis 3, wobei die Schrägkugellager (41, 42, 43) jeweils einen Haltering aufweisen, die Schrägkugellager (41, 42) in der vorderen Position in einer größeren Anzahl von Reihen ihre Halteringe aus einem Polyamid-Harz gemacht aufweisen, und die Schrägkugellager (43) in der hinteren Position in einer geringeren Anzahl von Reihen ihre Halteringe aus einem Phenol- oder einem PEEK-Harz gemacht aufweisen.

5. Lagervorrichtung (4) für eine Werkzeugmaschinen-Hauptwelle (3), wobei die Lagervorrichtung (4) die mehrreihigen Schrägkugellagervorrichtungen gemäß einem der Ansprüche 1 bis 4 für ein vorderseitiges Lager (4) der Hauptwelle (3) einsetzt.

## Revendications

1. Dispositif de roulements à billes à contact oblique et multiples rangées comprenant :
des roulements à billes à contact oblique (41, 42, 43), ayant chacun un angle de contact (α1, α2, α3), disposés en un réseau de trois ou d'un plus grande nombre de rangées,
le nombre de rangées des roulements à billes à contact oblique (41, 42) dans une position avant et le nombre de rangées des roulements à billes à contact oblique (43) dans une position arrière étant différents l'un de l'autre,
les roulements à billes à contact oblique (41, 42) dans la position avant ayant un plus grand nombre de rangées que les roulements à billes à contact oblique (43) dans la position arrière,
le nombre de rangées des roulements à billes à contact oblique (41, 42) dans la position avant et le nombre de rangées des roulements à billes à contact oblique (43) dans la position arrière étant agencés selon une configuration dos à dos,
**caractérisé en ce que**
les roulements à billes à contact oblique (41, 42) dans la position avant en un plus grand nombre de rangées ont leurs éléments roulants constitués d'acier, et les roulements à billes à contact oblique (43) dans la position arrière en un plus petit nombre de rangées ont leurs éléments roulants constitués de céramique.

2. Dispositif de roulements à billes à contact oblique et multiples rangées selon la revendication 1, dans lequel les roulements à billes à contact oblique (41, 42) en un plus grand nombre de rangées ont leurs éléments roulants d'un diamètre Da, les roulements à billes à contact oblique (43) en un plus petit nombre de rangées ont leurs éléments roulants d'un diamètre Da', et les diamètres ont une relation exprimée par Da<Da'≤1,5·Da.

3. Dispositif de roulements à billes à contact oblique et multiples rangées selon la revendication 1 ou 2, dans lequel les roulements à billes à contact oblique (43) en un plus petit nombre de rangées ont leur angle de contact (a3) de a'°, les roulements à billes à contact oblique (41, 42) en un plus grand nombre de rangées ayant leur angle de contact (α1, α2) de α°, et les angles de contact (α1, α2, α3) ont une relation exprimée par α'°≤(α+30)°.

4. Dispositif de roulements à billes à contact oblique et multiples rangées selon l'une quelconque des revendications 1 à 3, dans lequel les roulements à billes à contact oblique (41, 42, 43) ont chacun un élément de retenue, les roulements à billes à contact oblique (41, 42) dans la position avant en un plus grand nombre de rangées ont leurs dispositifs de retenue constitués d'une résine polyamide, et les roulements à billes à contact oblique (43) dans la position arrière en un plus petit nombre de rangées ont leurs dispositifs de retenue constitués d'un phénol ou d'une résine PEEK.

5. Dispositif de roulements (4) pour un arbre principal de machine-outil (3), dans lequel le dispositif de roulements (4) utilise les dispositifs de roulements à billes à contact oblique et multiples rangées selon l'une des revendications 1 à 4 pour un roulement côté avant (4) de l'arbre principal (3).
